# EUROPEAN PATENT SPECIFICATION

(11) **EP 2 355 403 B1**
(45) Date of publication and mention of the grant of the patent: **06.12.2017**
(21) Application number: 10152278.7
(22) Date of filing: 01.02.2010
(51) Int. Cl.: H04L 12/18, H04L 29/06, H04L 29/08

(54) **A METHOD FOR DISTRIBUTING DATA ACROSS A MOBILE AD-HOC WIDE AREA NETWORK**
VERFAHREN ZUR VERTEILUNG VON DATEN ÜBER EIN MOBILES AD-HOC-WEITBEREICHSNETZWERK
PROCÉDÉ DE PERTURBATION DE DONNÉES DANS UN RÉSEAU ÉTENDU AD HOC MOBILE

(43) Date of publication of application: 10.08.2011
(73) Proprietor: THALES NEDERLAND B.V., 7550 GD Hengelo (NL)
(72) Inventor: Laarhuis, Jan, 7534 PA, Enschede (NL)
(74) Representative: Nguyen Van Yen, Christian

(56) References cited:
- EP-A1- 1 959 637
- EP-A2- 1 890 423
- EDUARDO CERQUEIRA ET AL: "MMC04-3: A Unifying Architecture for Publish-Subscribe Services in the Next Generation IP Networks" GLOBAL TELECOMMUNICATIONS CONFERENCE, 2006. GLOBECOM '06. IEEE, IEEE, PI, 1 November 2006 (2006-11-01), pages 1-5, XP031075219 ISBN: 978-1-4244-0356-1
- CERQUEIRA E ET AL: "Multi-user Session Control in the Next Generation Network" PROCEEDINGS OF MOBIWAC'06, TORREMOLINOS, MALAGA, SPAIN, 2 October 2006 (2006-10-02) , pages 148-157, XP040048440
- SCHLESSELMAN J M ET AL: "OMG data-distribution service (DDS): architectural update" MILITARY COMMUNICATIONS CONFERENCE, 2004. MILCOM 2004. 2004 IEEE MONTEREY, CA, USA 31 OCT. - 3 NOV. 2004, PISCATAWAY, NJ, USA,IEEE, vol. 2, 31 October 2004 (2004-10-31), pages 961-967, XP010825802 ISBN: 978-0-7803-8847-5
- SCHMIDT D C ET AL: "Addressing the challenges of mission-critical information management in next-generation net-centric pub/sub systems with OpenSplice DDS" PARALLEL AND DISTRIBUTED PROCESSING, 2008. IPDPS 2008. IEEE INTERNATIONAL SYMPOSIUM ON, IEEE, PISCATAWAY, NJ, USA, 14 April 2008 (2008-04-14), pages 1-8, XP031268539 ISBN: 978-1-4244-1693-6
- NANBOR WANG ET AL: "Toward an adaptive data distribution service for dynamic large-scale network-centric operation and warfare (NCOW) systems" MILITARY COMMUNICATIONS CONFERENCE, 2008. MILCOM 2008. IEEE, IEEE, PISCATAWAY, NJ, USA, 16 November 2008 (2008-11-16), pages 1-7, XP031408158 ISBN: 978-1-4244-2676-8

## Description

### Technical field :

The present invention relates to a method for distributing data across a network, as well as to a distributed system implementing said method. For example, the invention is particularly applicable to distribution of data in a mobile *ad-hoc* wide area network.

### Prior art and technical problem :

Some systems comprise geographically distributed nodes running applications whose data needs to be distributed within the system. In certain conditions, the nodes may form a mobile *ad-hoc* network (MANET), a wide-area network (WAN) or both. Such networks can have low-bandwidth and lossy links, especially when the nodes are mobile and thus likely to spontaneously join and leave the network. Current data distribution products, like the Splice product line, have been designed with high-speed, broadcast LAN (Local Area Network) in mind. In the Splice products, emitting nodes first broadcast data to all nodes and subsequently receiving nodes select the data they need. Such behaviour leads to severe performance penalties when applied in a mobile *ad-hoc* wide area network, as it involves unnecessary data transmissions over the network and extensive data filtering at the consuming nodes. A paper by Nanbor Wang et al, "Toward an adaptive data distribution service for dynamic large-scale network-centric operation and warfare (NCOW) systems", published in the proceedings of MILCOM 2008, describes an exemplary prior art implementation of a data distribution service comprising publish/subscribe middleware.

### Summary of claims :

The present invention aims to provide a method which may be used to overcome the technical problems described above. The underlying idea is to eliminate the need for broadcast: instead of the receiver-selection of data, a sender-selection of data is preferable, so as to optimize the parsimony of data distribution between the nodes. To achieve that, the present invention proposes distributing data in a mobile *ad-hoc* wide area network based on the publish-subscribe paradigm, according to which nodes publish data they produce, said data being predefined in a data model, while nodes subscribe to data they need, the publish-subscribe paradigm being implemented using the IP-based (Internet Protocol) Source-Specific Multicast method (SSM) as the basic data distribution mechanism, even in case of only one receiver. The invention is defined by the independent claims. Further embodiments are defined by the dependent claims.

### Advantages :

Thus, an advantage provided by the present invention in any of its aspects is the ability to easily select data from specific parts of the mobile *ad-hoc* wide area network. This is advantageous when, for example, a vessel sails through a field of nodes and only needs data from the neighbouring nodes. Another advantage provided by the present invention is that an effective distribution Quality of Service (QoS) is possible. The treatment attributes in the data element definition in the data model is mapped to corresponding service classes of the "IP DiffServ" model. Because the network load is known, proper network dimensioning and priority queuing results in QoS guarantees. Yet another advantage provided by the present invention is that multi-party multi-media conferencing sessions are supported. Because SSM is used as the primary delivery primitive, conferencing communication is natively supported. A further advantage is that the data model can be much simpler because no information regarding the publisher is required in the elements of the data model.

### Drawings :

Non-limiting examples of the invention are described below with reference to the accompanying drawings in which :
- figure 1 schematically illustrates by a diagram the high-level decomposition of an exemplary loosely coupled system according to the invention;
- figure 2 and figure 3 schematically illustrate by diagrams an exemplary co-ordination model according to the invention;
- figure 4 schematically illustrates by a diagram an exemplary interaction of an application with an agent according to the invention;
- figure 5 schematically illustrates by a diagram the concepts of multicast in the Internet;
- figure 6, schematically illustrates by a diagram the Internet Group Management Protocol operations;
- figure 7, schematically illustrates by a diagram the functional architecture of an exemplary Publish-Subscribe System according to the invention.
In the figures, like reference numbers are assigned to like items.

### Description of invention referring to figures :

In the present exemplary embodiment, it is described a distributed surveillance system comprising a plurality of nodes dispersed over platforms, for example mobile navy ships. The primary capability of the system is observation, which includes surveillance (object detection, tracking and fusion), reconnaissance (object classification and identification) and object tracking for guidance of effectors. Though each node is perfectly useful in a stand-alone configuration, placing nodes on spatially distributed platforms creates a distributed system offering functionalities far beyond for example Tactical Link systems. However, it is important understanding that the present exemplary embodiment shall not be interpreted as limiting the scope of the present invention to surveillance systems.

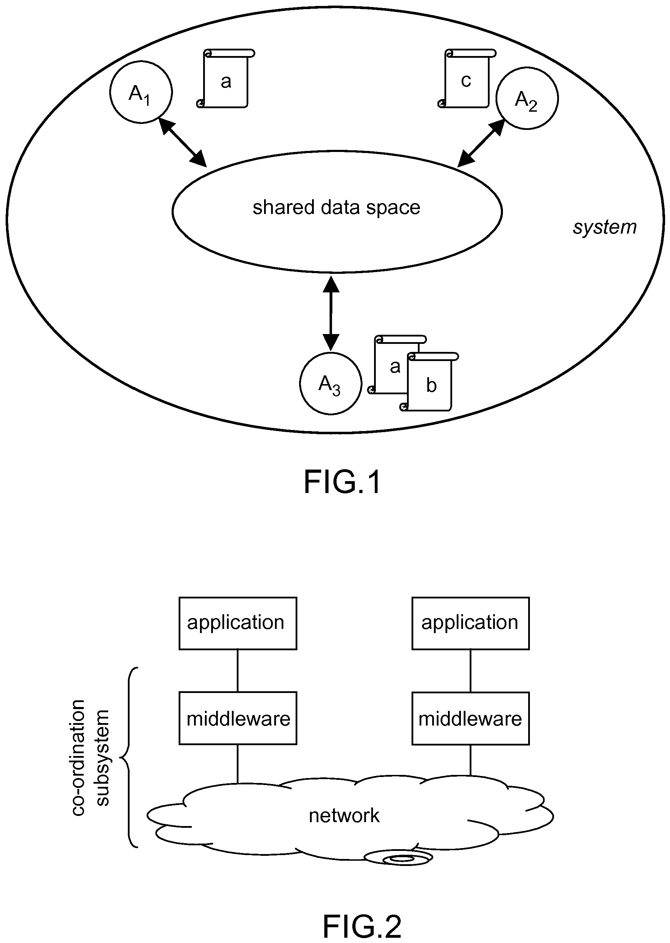

Figure 1 schematically illustrates the high-level decomposition of an exemplary loosely coupled system according to the invention. Applications A₁, A₂ and A₃ may represent a sensor interface, an effector interface, or a processing algorithm. In any case, applications A₁, A₂ and A₃ are software programs. Applications A₁, A₂ and A₃ exchange data by use of a shared data space. A data model defines the different kinds of data that can be exchanged by use of the shared data space, such as a kind a, a kind b and a kind c. In the following, the different kinds of data are called *infoclasses*. The definition of an infoclass is similar to the definition of an object class. An infoclass has a name chosen such that unambiguous interpretation of the infoclass is possible. For each infoclass there is one or more instances, that is to say instantiations of an infoclass. Samples of the same instance of an infoclass appear at different moments in time. Samples are the atomic entities of exchange between applications A₁, A₂ and A₃. As an example, the infoclass 'sensor measurement' may be considered. Some instances of this infoclass may be 'radar plot' providing range, bearing, elevation and velocity of an object, 'AIS dynamic information' providing range, bearing and elevation of an object and 'sonar contact' providing bearing information on an object. Samples of the instance 'radar plot' may be the repeated measurements of the same object at each antenna rotation.

For an infoclass there can be many samples of a single instance, only one sample of many instances, or many samples for each of many instances. This depends on the nature of the infoclass and the granularity of the data model. In a high-granular data model there are many infoclasses, each having a relatively simple structure. In a low-granular data model there are relatively few infoclasses, each having a complex structure. A good data model adjusts the granularity to the system it is part of. Each infoclass may comprise the following attributes:
o key attributes : these attributes serve to uniquely identify each instance of an infoclass;
o data attributes : these attributes collectively contain the information pertaining to the infoclass;
o treatment attributes : these attributes prescribe how the samples of an instance should be treated during exchange;
o time attribute : this attribute provides the time of creation of the instantiated data attributes, and serves to uniquely identify each sample of an instance.

Based on these attributes, each sample of an instance of an infoclass may be represented by a data record as follows :
Infoclass name
{key attr: type}
{treat attr: type}
{data attr: type}
time attr: type

The semicolons indicate that multiple fields may exist. For example, there may be two or more key-fields in a data record. This is the case when one key attribute is not sufficient for unique identification of an instance. In most cases, there are multiple data-fields for an infoclass. These fields may be of simple, but also of more complex types.
The treament attributes may comprise the following fields:
∘ durability : this field relates to how long the instance should exist after the instance has been created and exchanged. There are two durability classes: volatile and persistent.
∘ urgency : this field relates to time boundary for the exchange of the instance, after which it becomes worthless;
∘ priority : this field relates to how important the infoclass is, relative to other infoclasses;
∘ security : this field relates to the classification level of the infoclass.

Applications A₁, A₂ and A₃ operate on these data records, while the records are serialised for transmission over the network when the record must be exchanged with other applications. During this serialization, the treatment attributes may advantageously be used according to the invention to appropriately map the instance on the available service classes of the underlying delivery system used for the exchange of information. For that purpose, the underlying network may advantageously support the following three distribution services classes:
∘ best-effort service : this service treats all instances equal;
∘ reliable service : this service assigns lower discard priority to instances that request this service;
∘ real-time service : this service assigns a higher delay priority to instances that request this service.
The system must map each written instance of a topic to the most appropriate distribution service. Of the treatment attributes, only the urgency and priority attributes are important for the mapping on the distribution service. An example mapping is shown in the following QoS-mapping table 1:

**Table 1**

| treatment attributes | | distribution service | | |
|---|---|---|---|---|
| urgency | priority | best-effort | reliable | real-time |
| rt | low | | | ✔ |
| rt | high | | ✔ | ✔ |
| nrt | low | ✔ | | |
| nrt | high | ✔ | ✔ | |

In table 1, 'rt' is used for data under real-time constraints, while 'nrt' is used for data that are not under real-time constraints.

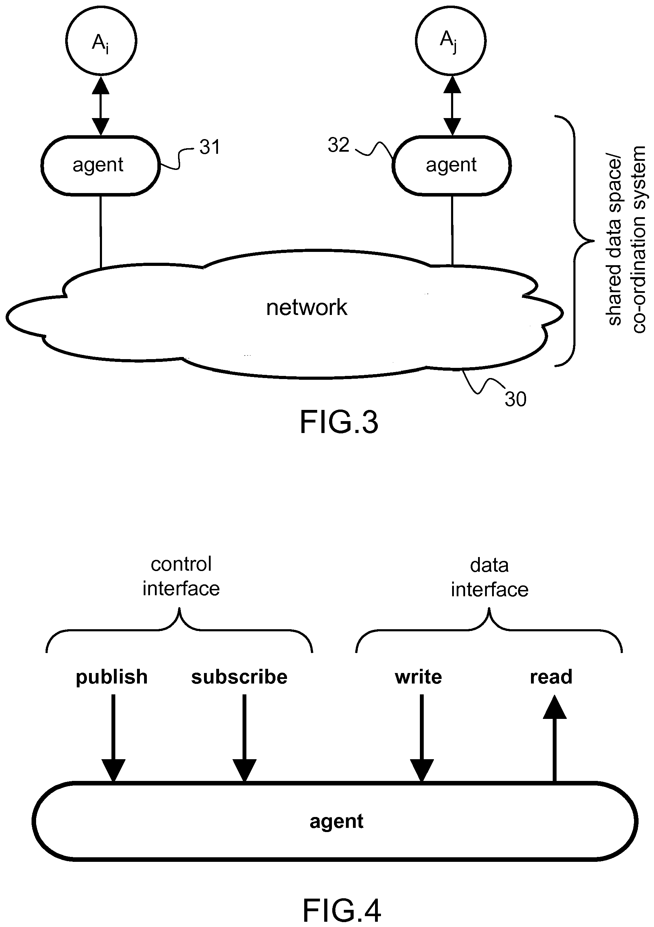

Figure 2 and Figure 3 schematically illustrate an exemplary co-ordination model according to the invention, based on the publish-subscribe paradigm. Indeed, to exchange data by use of the shared data space, the applications A₁, A₂ and A₃ have to co-ordinate.

The shared data space is where samples of the instances are actually stored. Because the shared data space is part of the co-ordination model, applications can be stateless, as storage of application data determines application state. Figure 2 schematically illustrates an exemplary co-ordination subsystem implementing the co-ordination model according to the invention between peer entities running applications.

Figure 2 illustrates the layering of the present exemplary subsystem into an application layer, a middleware layer and a network layer. Without losing generality, it can be stated that these peer entities are computing nodes attached to a network 30, and which contain middleware and one or more applications, such as A₁ and A₂ for example. Because the co-ordination model according to the invention is based on the publish-subscribe paradigm, the co-ordination subsystem may be called the Publish-Subscribe System (PSS) in the following.

Figure 3 schematically illustrates that the shared data space may be decomposed in agents 31 and 32, implementing the middleware, and the network 30. Hereby, each applications Aᵢ and Aⱼ, where i and j are integers, may communicate with the shared data space via an agent. Each application among A₁, A₂ and A₃ is interested in one or more infoclasses, as illustrated by Figure 1. An application can have the role of a producer, a consumer or both. When an application is a producer, it writes samples of instances of an infoclass. When it is a consumer, it reads samples of the same instance or samples of different instances of one infoclass. Thus, a n x m producer-consumer relation exists when for a particular infoclass there are one or more producers and one or more consumers within the system. Thus a producer-consumer relation denotes the interest relation between applications with regard to a specific infoclass.

Figure 4 schematically illustrates that the interaction of an application among A₁, A₂ and A₃ with an agent of the PSS may take place using an interface comprising a control interface used for the proper configuration and a data interface used for the actual exchange of information. The control interface may comprise two primitives: *publish(infoclass)* and *subscribe(infoclass)*. The data interface may comprise the following primitives as well: *write(instance)*, *write(sample)*, *read(instance)* and *read(sample)*. It is worth noticing the difference of the arguments in the control primitives and the data primitives. Only single arguments are shown for clarity. Each primitive may, however, contain more arguments.

Multicasting is a data forwarding mode in a network where multiple nodes simultaneously receive the once-only transmission of a sending node. The mechanism needed to perform the one-to-many delivery of the transmitted information depends on the type of network. In broadcast networks the mechanism is inherently provided by the very nature of the network. In store-and-forward networks, however, replication and routing mechanisms are needed in addition to the default unicast forwarding. Aforementioned broadcast networks natively perform a specific kind of multicast: one-to-all delivery, which is commonly called broadcast. In addition to the delivery, there is also a subscription mechanism needed, by which nodes in a network indicate their wish to receive information, for example to become one of the many in one-to-many delivery.

The introduction of multicast in the Internet really started with the specification of the Internet Group Management Protocol (IGMP) documented by S. Deering in "Host Extensions for IP Multicasting" (IETF RFC 1112, August, 1989), this document being referenced to as RFC 1112 in the present patent application. IGMP is a protocol that implements a multicast subscription mechanism. Of the other mechanisms, that is to say multicast forwarding and multicast routing, multicast routing is the most complex one. Many kinds of multicast routing algorithms and protocols have been proposed and specified. A key concept in multicast is that of the group address. This identifies the group of receivers for a specific multicast transmission. Furthermore, this identity is used for all entailed mechanisms like subscription, routing and forwarding.

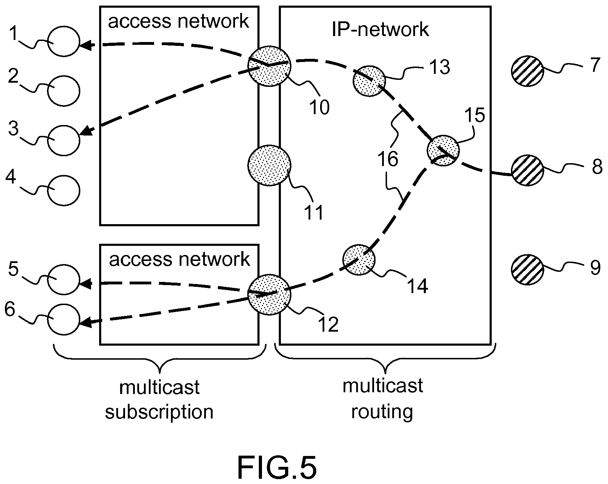

Figure 5 schematically illustrates by a diagram the concepts of multicast in the Internet, abbreviated "IP-multicast" in the present application. The white circles represent group members 1, 2, 3, 4, 5 and 6, which are entities receiving multicast transmissions. The patterned circles represent multicast senders 7, 8 and 9, which are entities sending multicast packets to the group members 1 to 6. The grey circles represent multicast routers 10, 11, 12, 13, 14 and 15 forming an IP-network. The multicast routers 10 to 15 are entities participating in multicast routing and possibly in multicast subscription processes. All multicast routers 10 to 15 are basically involved in the multicast routing process, while only the "edge" multicast routers 10 to 12 are involved in the multicast subscription process, which takes place in a first access network between the group members 1 to 4 and the multicast routers 10 and 11 as well as in a second access network between the group members 5 and 6 and the multicast router 12.

The result of the multicast subscription and multicast routing processes is the establishment of delivery trees, each delivery tree being established from one multicast sender to one or several group members. For example, a delivery tree 16 is represented in dashed lines on Figure 5. The delivery tree 16 is established from the multicast sender 8 to the group members 1 and 3 passing by the multicast routers 15, 13 and 10, and to the group members 5 and 6 passing by the multicast routers 15, 14 and 12. Hereby, the actual transmission of a specified content by the multicast sender 8 over the delivery tree 16 to the group members 1, 3, 5 and 6 is a so-called multicast session.

The following section focuses on the multicast subscription mechanism taking place in the first access network between the group members 1 to 4 and the multicast routers 10 and 11 and in the second access network between the group members 5 and 6 and the multicast router 12, assuming that an adequate multicast routing protocol runs within the IP-network between the multicast routers 10 to 15.

Nowadays, there is a variety of multicast subscription protocols in the Internet: IGMPv1 to IGMPv3 for IPv4 or Multicast Listener Discovery (MLD) for IPv6 for example. In the present application, the abbreviation IGMP is used to denote the multicast subscription protocol in the Internet, assuming the functionality as specified in IGMPv3. IGMP is designed to operate between group members and multicast routers over broadcast networks, like Ethernet. This design assumption enables the use of well-known static group addresses for exchanging messages in IGMP, for example *all-systems* or *all-routers* or *all-multicast routers*. This requires that these static group addresses are permanently enabled on each interface of a group member, without IGMP involvement. When sending an IP packet with such a static group address as destination, the usual Address Resolution Protocol (ARP) is bypassed and translation of the static IP group address to a static hardware equivalence takes place according to the rules specified in RFC 1112. An Ethernet frame with the static hardware group address as destination reaches all nodes and those who have configured this hardware address accept the frame. These static group addresses are in contrast to the dynamic group addresses, to which group members can dynamically subscribe and unsubscribe using IGMP. However, the delivery of multicast packets with an established dynamic group address is exactly the same as for the above described delivery of packets with static group addresses.

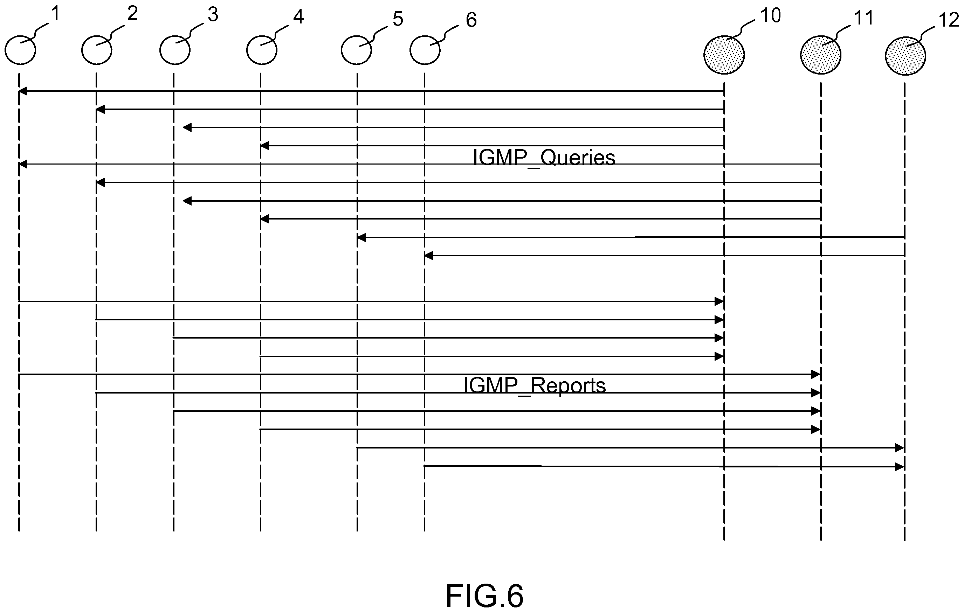

As illustrated by Figure 6, IGMP is quite parsimonious in its operation. For example, the multicast router 12 sends *IGMP_Query* messages to the *all-systems* group address over the second access network to invite nodes 5 and 6 to subscribe to one or more group addresses and corresponding source(s). Similarly, the multicast routers 10 and 11 send *IGMP_Query* messages to the *all-systems* group address over the first access network to invite nodes 1 to 4 to subscribe to one or more group addresses and corresponding source(s). It is worth noting that, in IGMP parlance, a so-called "source" corresponds to a multicast sender. Upon reception of an *IGMP_Query*, or when a host learns about a multicast session and wants to subscribe to its group address, group members assemble an *IGMP_Report* message reporting all *({source}, group address)* combinations they want to subscribe to, and send this message to the well-known group address *all-multicast routers*. It is worth noting that, in case of IGMP version 1 and version 2, all group members listen to the *IGMP_Report* messages of other group members and suppress their responses in case there is another subscription for the same group address. After all, because IGMP operates over a broadcast network, the multicast router only needs to know if there is one node interested in packets from a certain multicast tree. In case of a response to an *IGMP_Query*, group members respond at randomly delayed instances to avoid report storms.

IGMP allows for each group address to specify a set of sources it wants to receive packets from over this multicast address. This general use of multicast is called Any Source Multicast (ASM). SSM is a special kind of multicast, in which there is only one source in combination with a group address. SSM is specified in "Source-Specific Multicast for IP" (H. Holbrook and B. Cain, IETF RFC 4607, Aug. 2006), referenced to as RFC 4607 in the present patent application. In this case, group members subscribe to *(source, group address)* combinations or shortly (S,G) combinations. The corresponding delivery tree for each (S,G) is called a "channel". In the remainder of the present patent application, only SSM is considered without explicitly referring to it.

It is now described how the group members 1, 3, 5 and 6 obtain the necessary information about the multicast session over the delivery tree 16 to subscribe to its group address. Having a multicast subscription mechanism is useful only when group members know about which multicast senders send content on what group addresses. The process of getting this set of information is collectively denoted "multicast announcement". Multicast senders may use the Session Description Protocol (SDP) to document the necessary metadata of the content they are going to send. Amongst others, this metadata involves: session name, begin and end time, media comprising the session, and how to receive these media. The latter involves IP group addresses, transport ports and format of the media. For a group member this information is sufficient to subscribe to the corresponding multicast session. The distribution of the session metadata in the SDP format to potential group members can be done in a variety of ways. One of these methods is the Session Announcement Protocol (SAP). Using SAP, a distributed session directory is maintained from which users can retrieve the session description information. However, as described later, alternate advertisement mechanisms may be implemented as well.

It is now described the extensions required in the host IP implementation for the reception of multicast packets. In order to send and receive multicast packets in addition to unicast packets, additional primitives to applications of the IP-process are needed. Within an IP system, there is at least conceptually a service interface used by upper-layer protocols or application programs to ask the IP layer to enable and disable reception of packets sent to specific IP multicast addresses. The original multicast operations the IP service interface may be extended with are, according to RFC 1112 :
JoinHostGroup (group-address, interface)
LeaveHostGroup (group-address, interface)
According to the SSM specification in RFC 4607, the IP module interface to upper-layer protocols may be extended to allow protocols to request reception of all datagrams sent to a particular channel. The extension operations may be:
Subscribe (socket, source-address, group-address, interface)
Unsubscribe (socket, source-address, group-address, interface)
The parameters of these operations are the following :
∘ *socket* is an implementation-specific parameter used to distinguish among different requesting entities within the requesting host, for example programs or processes or communication end-points within a program or process;
∘ *source-address* is the address of the sending host (S);
∘ *group address* is the multicast address of the group (G);
∘ *interface* is the network interface configured for the reception of packets with the *group address* (G) as a destination.

In RFC 4607, the source-specific multicast service is defined as follows : a datagram sent with source IP address S and destination IP address G in the SSM range is delivered to each host socket that has specifically requested delivery of datagrams sent by S to G, and only to those sockets. By restricting the source to only one, the invention solves many problems associated with ASM related to routing, address allocation and access control.

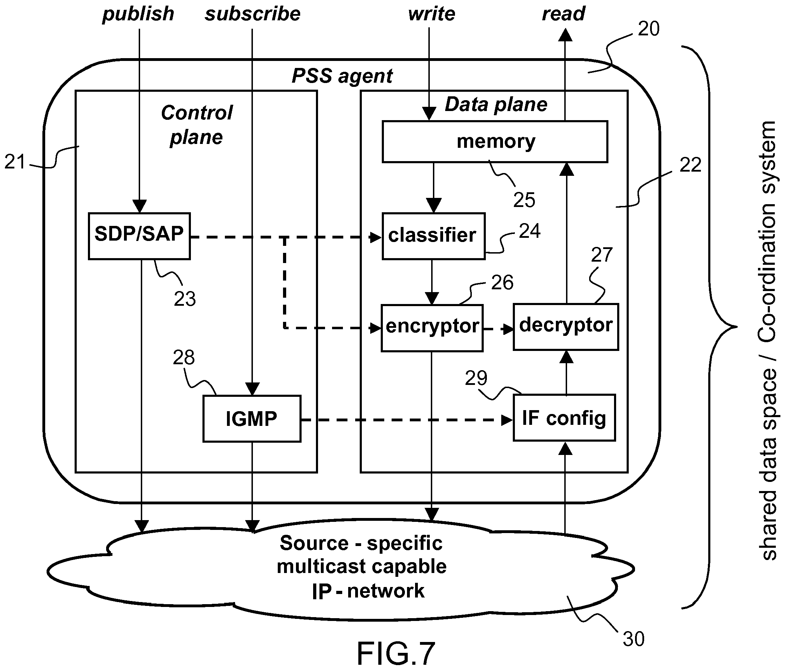

Figure 7 illustrates functional decomposition of an exemplary PSS according to the invention. As it is well known by men skilled in the art, a co-ordination system according to the publish-subscribe paradigm may be an agent 20 comprising the data space in the shape of a memory 25. The agent 20 may implement the middleware. The network 30 may be represented as a cloud in Figure 7. In the present exemplary implementation, the network 30 may be represented as a source-specie multicast capable IP-network. Due to the use of standard IP capabilities, the only requirements on the network, from a PSS perspective, is the support of these standard protocols. In particular, it does not need to support the usually complex multicast routing protocols like Distance Vector Multicast Routing Protocol (DVMRP) or Core Based Trees protocol (CBT), because simpler multicast routing protocols suffice to build delivery trees in SSM. As already explained in relation with Figure 4, each application may communicate with the shared data space via the agent 20, which provides to the applications an interface in accordance with the publish-subscribe paradigm : *publish*, *subscribe*, *write* and *read*. The present exemplary lightweight implementation is inspired by the existing Splice product line. The Splice application interface has been left intact as much as possible for backwards compatibility with existing systems, while the Splice network interface has been modified to advantageously use the SSM data distribution mechanism. Indeed, a tight integration with the routing process is required to accommodate the changing node topologies typical for mobile *ad-hoc* wide area network. In the agent 20, the network interface may be designed as follows, comprising a control plane 21 and a data plane 22.

The control plane 21 is responsible for establishing delivery trees (S,G) to support the producer-consumer relations in the system. It may do so by establishing SSM channels.

To do so, a producer uses a mechanism to publish an infoclass, that is to say a kind of information. In the IP-context there is no instant solution for this mechanism, but the Session Description Protocol (SDP) and the Session Announcement Protocol (SAP) pair may advantageously come close to what is needed, as illustrated in Figure 7 by an exemplary SDP/SAP publishing module 23. These protocols have been designed to organise advertisement of multimedia sessions delivered to listeners by multicast. According to the invention, this pair of protocols may be the basis for the advertisement of published infoclasses on the PSS as well. Thus, the publishing requirement may be implemented by defining an *all-participants* multicast group, either SSM or ASM, or by mapping an existing static group address to *all-participants*. Having this vehicle, periodic advertisements may be made of the published infoclasses of each producer. Alternatively, a proprietary advertisement mechanism may be easily built using available IP capabilities, the major requirements for advertisement of published infoclasses being given in the specifications of IGMPv3, widely known as IETF RFC 3376. For example, each node may send a *publish* message to the *all-systems* static multicast address containing the group addresses it sends on, that is to say the *infoclasses*. It may do so when it joins the network, and then periodically, for example every 5 minutes. In another example, which may be a more efficient mechanism in terms of network traffic, the available topology database may be used. In addition to the pure routing database, the topology database may also contain the geographic position of each node, as well as the type of each node. In the present exemplary surveillance system, the type of node may be surveillance, response or both for example. This may provide sufficient information for nodes to subscribe to the appropriate information, because it may be anticipated that all nodes with surveillance capabilities have identical capabilities, so that they will all be able to publish the same set of *infoclasses*.

For each published infoclass, the agent 20 prepares the distribution of instances of this infoclass. The treatment attributes may be inspected and a mapping may be made to the most appropriates service class of the underlying network. The result of this mapping may be sent to a packet classifier 24 in the data plane. When the treatment attributes indicate the need for secure distribution, the authentication and authorisation processes may be started with the result that in the data planes of all terminating agents of the channel, encryptor and decryptor modules similar to modules 26 and 27 respectively in the agent 20 are appropriately configured by virtue of a module 29, which provides a configuration interface.

On the consumer side, it is assumed that the agent 20 is aware of all advertisements in the PSS. From these advertisements, it derives the necessary subscription information. The agent 20 now knows what channels to subscribe to. The subscription occurs by becoming part of the appropriate channel, which may advantageously be done by issuing an SSM *subscribe* primitive carrying the correct arguments. In the present exemplary PSS agent 20, the *subscribe* primitive may be implemented by use of IGMPv3 in a module 28. The interface is now ready to receive from the particular channel.

The data plane 22 is responsible for actually sending and receiving packets that contain instances of infoclasses written by the producer and read by the consumer. When a producer writes an instance of an infoclass in the memory 25 of the agent 20, the agent 20 performs the following actions:
∘ serialization : the agent 20 transforms the data structure of the instance into the payload of a message, and encapsulates it into an IP packet that can be sent over the network 30.
∘ classification : based on rules configured during the publish action of the infoclass, the classifier 24 sets the appropriate QoS-related bits in the packet header.
∘ encryption : when secure distribution is needed, encryption of the packets by the module 26 takes place at the producer and decryption by the module 27 at the consumer.
∘ transmission : the packet is sent on the network 30 at the appropriate interface.
The payload of the message sent does not contain the treatment attributes of the infoclass. This information is only used for the determination of the correct distribution conditions in terms of QoS, security and storage of the instance.

One of the most salient properties of the above described PSS according to the invention is the fact that IP multicast is used for communication between predominantly two parties. As for this communication pattern, regular IP unicast is usually the obvious communication primitive to be used.

### Further advantages:

A further advantage of the above described PSS according to the invention is that, though using IP-multicast for unicast communication seems at first glance superfluous, and perhaps even inefficient, it provides unprecedented distribution flexibility. With distribution flexibility is meant the independence of the PSS-channels for the spatial and temporal distribution of its producers and its consumers. Regarding the spatial distribution, the PSS-implementation is applicable to both the wide area and the local area. Regarding both spatial and temporal distribution, channels enable seemless transition to new configurations:
∘ in the case where the source is dynamically changed from S to S', which might be necessary in cases of failover, or when the system is configured differently. The new producer must publish before it can write its instances, so there will be a short interruption of data delivery.
∘ in the case where the members of the group address change, which can be due to failover in case of node failures, but can also be due to deliberate adding or pruning of consumers.

A further advantage of the above described PSS according to the invention is that it provides an almost ideal abstraction for the publish-subscribe service. An infoclass is uniquely associated with a group address G, while a publisher is uniquely associated with its unicast address S. This is all any application needs to know in order to subscribe to and subsequently receive the associated data. Reception of this data by any number of different applications, irrespective of their subscription moment, is inherently supported by the PSS.

Yet a further advantage of the above described PSS according to the invention is that it provides implicit and automatic end-to-end QoS support, due to the inclusion of a *treatment* field in the record of an infoclass, to the classification function in the PSS and to the support of DiffServ in the underlying network. Key to this QoS provision mechanism is the fact that QoS is exclusively associated with data by the *treatment* field in the records of the information model. Applications, processing this data, need not be aware of the communication treatment, and can therefore focus entirely on executing the algorithm. It is worth noting that, according to RFC 4607, SSM may work well with IP-based Authentication, Authorization and Accounting (AAA) concepts of the Internet Protocol Security (IpSec). This may enable automated configuration of secure communication when the *treatment* field in the infoclass indicates the need for it.

The various properties previously mentioned apply to the obvious usage of the publish-subscribe service, namely periodic data exchange. However, the above described PSS according to the invention incorporates also all functionalities to support real-time interactive communication such as telephony and especially conferencing as well. For this class of communication sessions, the *publish* primitive must be interpreted as a *call request* primitive, and the asynchronism in time is not exploited here for the benefit, but should instead not be exploited because synchronous communication is needed here. The PSS capabilities can be used to support telephony and conference sessions with distributed control and distributed data exchange. In most current solutions of such sessions, the control usually is centralised. A prerequisite for distributed control is availability of an address book at all system users. The called party(ies) is(are) then mapped on the group address, and the calling party is mapped to the source address, resulting in a channel to be used for multi-media session.

Yet another advantage of the above described PSS according to the invention is that it implements an alternative network interface for existing Splice products, so that the applicability of these products is not limited to LAN environments anymore.

## Claims

1. A method for distributing data across a network (30) which comprises a plurality of nodes, **characterized in that** said data comprise instances of classes, each class having at least one instance, said nodes exchanging data through a shared data space comprising at least one agent (20) for managing data exchange between nodes, the method including:
- a step of publishing the class of the data, said step being performed by a node producing the data, which subsequently writes instances of said class in said shared data space ;
- a step of subscribing to the class of the data, said step being performed by at least one node consuming the data, which subsequently reads instances of the class from said shared data space ;
said agent being configured for sending and receiving packets containing instances of a class written by a producing node and read by a subscribing node, the method being further **characterized in that** the data are conveyed from the producing node to the consuming nodes by use of a Source-Specific Multicast "SSM" channel even in case of only one consuming node, so as to limit data distribution between the nodes, and **in that** a class is uniquely associated with a group address and the producing node is uniquely associated with the source address of the SSM channel.

2. A method as claimed in Claim 1, **characterized in that** the network (30) is a wide area network.

3. A method as claimed in Claim 1, **characterized in that** the network is wireless, the nodes being mobile nodes likely to join and leave the network (30).

4. A method as claimed in Claim 1, **characterized in that** the step of subscribing to the class of the data is implemented by use of the Internet Group Management Protocol "IGMPv3".

5. A method as claimed in Claim 1, **characterized in that** the step of publishing the class of the data is implemented by use of the Session Description Protocol "SDP" and/or the Session Announcement Protocol "SAP".

6. A method as claimed in Claim 1, **characterized in that** the step of publishing the class of the data is implemented such that the producing node sends a message indicating the data it produces to all the consuming nodes when it joins the network and then periodically.

7. A method as claimed in Claim 1, **characterized in that** the data comprises at least one field prescribing how it is to be conveyed from the producing node to the consuming nodes so as to ensure quality of service.

8. A method as claimed in Claim 7, **characterized in that** the data comprises:
- a field prescribing the durability of the data, and/or;
- a field prescribing the urgency of the data, and/or;
- a field prescribing the priority of the data, and/or;
- a field prescribing the security of the data.

9. A method as claimed in Claim 8, **characterized in that** the field prescribing the durability of the data indicates that the data is volatile or persistent.

10. A method as claimed in Claim 8, **characterized in that** the field prescribing the urgency of the data indicates that the data is under real-time constraints or not.

11. A method as claimed in Claim 8, **characterized in that** the field prescribing the priority of the data indicates that the data is of high or low priority.

12. A method as claimed in Claim 10 and 11, **characterized in that**, the network providing a plurality of distribution services, the fields urgency and/or priority are used to select one of these services to convey the data.

13. A method as claimed in Claim 12, **characterized in that** the distribution services provided by the network include:
- a best-effort service, and/or;
- a reliable service, and/or;
- a real-time service.

14. A distributed system comprising a plurality of nodes, the system including means for distributing data across the system, **characterized in that** said data comprise instances of classes, each class having at least one instance, said nodes exchanging data through a shared data space comprising at least one agent for managing data exchange between nodes, said means for distributing data across the system including :
- Means for publishing the class of the data, said means being hosted by a node producing the data which subsequently writes instances of said class in said shared data space ;
- Means for subscribing to the class of the data, said means being hosted by at least one node consuming the data , which subsequently reads instances of the class from said shared data space ;
said agent being configured for sending and receiving packets containing instances of a class written by a producing node and read by a subscribing node,
the system being further **characterized in that** the data are conveyed from the producing node to the consuming nodes by use of a Source-Specific Multicast "SSM" channel even in case of only one consuming node, so as to limit data distribution between the nodes, and **in that** a class is uniquely associated with a group address and the producing node is uniquely associated with the source address of the SSM channel.

## Patentansprüche

1. Verfahren zum Verteilen von Daten über ein Netzwerk (30), das mehrere Knoten umfasst, **dadurch gekennzeichnet, dass** die Daten Instanzen von Klassen umfassen, wobei jede Klasse mindestens eine Instanz aufweist, wobei die Knoten Daten über einen gemeinsam genutzten Datenraum austauschen, der mindestens einen Vermittler (20) zum Verwalten des Datenaustauschs zwischen den Knoten umfasst, wobei das Verfahren Folgendes beinhaltet:
- einen Schritt des Veröffentlichens der Klasse der Daten, wobei der Schritt von einem Knoten ausgeführt wird, der die Daten erzeugt, der nachfolgend Instanzen der Klasse in den gemeinsam genutzten Datenraum schreibt,
- einen Schritt des Abonnierens der Klasse der Daten, wobei der Schritt von mindestens einem Knoten ausgeführt wird, der die Daten konsumiert, der nachfolgend Instanzen der Klasse aus dem gemeinsam genutzten Datenraum liest,
wobei der Vermittler dafür konfiguriert ist, Pakete zu senden und zu empfangen, die Instanzen von einer Klasse enthalten, die von einem erzeugenden Knoten geschrieben und von einen abonnierenden Knoten gelesen werden, wobei das Verfahren ferner **dadurch gekennzeichnet ist, dass** die Daten unter Verwendung eines SSM-Kanals (Source-Specific Multicast Channel) auch im Fall nur eines konsumierenden Knotens vom erzeugenden Knoten zum konsumierenden Knoten übermittelt werden, so dass die Datenverteilung zwischen den Knoten begrenzt ist, und dadurch, dass eine Klasse eindeutig einer Gruppenadresse zugeordnet ist und der erzeugende Knoten eindeutig der Quelladresse des SSM-Kanals zugeordnet ist.

2. Verfahren nach Anspruch 1, **dadurch gekennzeichnet, dass** das Netzwerk (30) ein Weitbereichsnetzwerk ist.

3. Verfahren nach Anspruch 1, **dadurch gekennzeichnet, dass** das Netzwerk drahtlos ist und die Knoten mobile Knoten sind, die sich voraussichtlich mit dem Netzwerk (30) verbinden und es verlassen.

4. Verfahren nach Anspruch 1, **dadurch gekennzeichnet, dass** der Schritt des Abonnierens der Klasse der Daten unter Verwendung des Internet-Group-Management-Protokolls v3 "IGMPv3") ausgeführt wird.

5. Verfahren nach Anspruch 1, **dadurch gekennzeichnet, dass** der Schritt des Veröffentlichens der Klasse der Daten unter Verwendung eines Session-Description-Protokolls "SDP" und/oder eines Session-Announcement-Protokolls "SAP" ausgeführt wird.

6. Verfahren nach Anspruch 1, **dadurch gekennzeichnet, dass** der Schritt des Veröffentlichens der Klasse der Daten derart ausgeführt wird, dass der erzeugende Knoten eine Nachricht sendet, die allen konsumierenden Knoten die Daten anzeigt, die er erzeugt, wenn er sich mit dem Netzwerk verbindet, und danach periodisch.

7. Verfahren nach Anspruch 1, **dadurch gekennzeichnet, dass** die Daten mindestens ein Feld umfassen, das festlegt, wie sie vom erzeugenden Knoten zu den konsumierenden Knoten zu übermitteln sind, so dass die Dienstgüte gewährleistet ist.

8. Verfahren nach Anspruch 7, **dadurch gekennzeichnet, dass** die Daten Folgendes umfassen:
- ein Feld, das die Dauerhaftigkeit der Daten festlegt, und/oder
- ein Feld, das die Dringlichkeit der Daten festlegt ,und/oder
- ein Feld, das die Priorität der Daten festlegt, und/oder
- ein Feld, das die Sicherheit der Daten festlegt.

9. Verfahren nach Anspruch 8, **dadurch gekennzeichnet, dass** das Feld, das die Dauerhaftigkeit der Daten festlegt, anzeigt, dass die Daten flüchtig oder beständig sind.

10. Verfahren nach Anspruch 8, **dadurch gekennzeichnet, dass** das Feld, das die Dringlichkeit der Daten festlegt, anzeigt, dass die Daten Echtzeitbeschränkungen unterliegen oder nicht.

11. Verfahren nach Anspruch 8, **dadurch gekennzeichnet, dass** das Feld, das die Priorität der Daten festlegt, anzeigt, dass die Daten von hoher oder geringer Priorität sind.

12. Verfahren nach Anspruch 10 und 11, **dadurch gekennzeichnet, dass**, da das Netzwerk mehrere Verteilungsdienste bereitstellt, die Felder Dringlichkeit und/oder Priorität verwendet werden, um einen dieser Dienste zum Übermitteln der Daten auszuwählen.

13. Verfahren nach Anspruch 12, **dadurch gekennzeichnet, dass** die Verteilungsdienste, die durch das Netzwerk bereitgestellt werden, Folgendes beinhalten:
- einen Best-Effort (Bestes-Bemühen)-Dienst und/oder
- einen verlässlichen Dienst und/oder
- einen Echtzeitdienst.

14. Verteiltes System, mehrere Knoten umfassend, wobei das System Mittel zum Verteilen von Daten über das System beinhaltet, **dadurch gekennzeichnet, dass** die Daten Instanzen von Klassen umfassen, wobei jede Klasse mindestens eine Instanz aufweist, wobei die Knoten Daten über einen gemeinsam genutzten Datenraum austauschen, der mindestens einen Vermittler zum Verwalten des Datenaustauschs zwischen den Knoten umfasst, wobei die Mittel zum Verteilen der Daten über das System Folgendes beinhalten:
- Mittel zum Veröffentlichen der Klasse der Daten, wobei die Mittel von einem Knoten gehostet werden, der die Daten erzeugt, der nachfolgend Instanzen der Klasse in den gemeinsam genutzten Datenraum schreibt,
- Mittel zum Abonnieren der Klasse der Daten, wobei die Mittel von mindestens einem der Knoten gehostet werden, der die Daten konsumiert, der nachfolgend Instanzen der Klasse aus dem gemeinsam genutzten Datenraum liest,
wobei der Vermittler dafür konfiguriert ist, Pakete zu senden und zu empfangen, die Instanzen von einer Klasse enthalten, die von einem erzeugenden Knoten geschrieben und von einen abonnierenden Knoten gelesen werden,
wobei das System ferner **dadurch gekennzeichnet ist, dass** die Daten unter Verwendung eines Source-Specific Multicast (SSM)-Kanals auch im Fall nur eines konsumierenden Knotens vom erzeugenden Knoten zum konsumierenden Knoten übermittelt werden, so dass die Datenverteilung zwischen den Knoten begrenzt ist, und dadurch, dass eine Klasse eindeutig einer Gruppenadresse zugeordnet und der erzeugende Knoten eindeutig der Quelladresse des SSM-Kanals zugeordnet ist.

## Revendications

1. Procédé pour distribuer des données sur un réseau (30), qui comprend une pluralité de noeuds, **caractérisé en ce que** lesdites données comprennent des instances de classes, chaque classe comportant au moins un instance, lesdits noeuds échangeant des données par l'intermédiaire d'un espace de données partagé qui comprend au moins un agent (20) pour gérer l' échange de données entre les noeuds, le procédé incluant :
- une étape consistant à publier la classe des données, ladite étape étant réalisée par un noeud produisant les données, quiécrit ultérieureurement des instances de ladite classe dans ledit espace de données partagé;
- une étape consistant à souscrire à la classe des données, ladite étape étant réalisée par au moins un noeud consommant les données, qui lit ultérieurement des instances de la classe à partir dudit espace de données partagé,
ledit agent étant configuré pour envoyer et recevoir des paquets qui contiennent des instances d'une classe qui sont écrits par un noeud de production et qui sont lus par un noeud de souscription, le procédé étant en outre **caractérisé en ce que** les données sont convoyées depuis le noeud de production jusqu'aux noeuds de consommation en utilisant un canal de multidiffusion spécifique à la source "SSM", même dans le cas d' un seul noeud de consommation, de manière à limiter la distribution de données entre les noeuds, et **en ce qu'**une classe est associée de manière unique à une adresse de groupe et le noeud de production est associé de manière unique à l'adresse de source du canal "SSM".

2. Procédé tel que revendiqué selon la revendication 1, **caractérisé en ce que** le réseau (30) est un réseau étendu.

3. Procédé tel que revendiqué selon la revendication 1, **caractérisé en ce que** le réseau est sans fil, les noeuds étant des noeuds mobiles susceptibles de rejoindre et de quitter le réseau (30).

4. Procédé tel que revendiqué selon la revendication 1, **caractérisé en ce que** l'étape de souscription à la classe des données est mise en oeuvre au moyen de l'utilisation du protocole de gestion de groupe Internet "IGMPv3".

5. Procédé tel que revendiqué selon la revendication 1, **caractérisé en ce que** l'étape de publication de la classe des données est mise en oeuvre en utilisantun protocole de description de session "SDP" et/ou un protocole d'annonce de session "SAP".

6. Procédé tel que revendiqué selon la revendication 1, **caractérisé en ce que** l'étape de publication de la classe des données est mise en oeuvre de telle sorte que le noeud de production envoie un message indiquant les données qu'il produit à tous les noeuds de consommation lorsqu'il rejoint le réseau puis de manière périodique.

7. Procédé tel que revendiqué selon la revendication 1, **caractérisé en ce que** les données comprennent au moins un champ qui prescrit comment elles doivent être convoyées depuis le noeud de production jusqu'aux noeuds de consommation de manière à assurer la qualité de service.

8. Procédé tel que revendiqué selon la revendication 7, **caractérisé en ce que** les données comprennent :
- un champ qui prescrit la durée de vie des données ; et/ou
- un champ qui prescrit l'urgence des données ; et/ou
- un champ qui prescrit la priorité des données ; et/ou
- un champ qui prescrit la sécurité des données.

9. Procédé tel que revendiqué selon la revendication 8, **caractérisé en ce que** le champ qui prescrit la durée de vie des données indique si les données sont volatiles ou persistantes.

10. Procédé tel que revendiqué selon la revendication 8, **caractérisé en ce que** le champ qui prescrit l'urgence des données indique si les données sont sous des contraintes temps réel ou non.

11. Procédé tel que revendiqué selon la revendication 8, **caractérisé en ce que** le champ qui prescrit la priorité des données indique si les données sont d'une priorité élevée ou faible.

12. Procédé tel que revendiqué selon les revendications 10 et 11, **caractérisé en ce que**, le réseau fournissant une pluralité de services de distribution, les zones d'urgence et/ou de priorité sont utilisées de manière à sélectionner l'un de ces services pour convoyer les données.

13. Procédé tel que revendiqué selon la revendication 12, **caractérisé en ce que** les services de distribution fournis par le réseau incluent :
- un service de meilleur effort; et/ou
- un service fiable ; et/ou
- un service en temps réel.

14. Système distribué comprenant une pluralité de noeuds, le système incluant un moyen pour distribuer des données sur le système, **caractérisé en ce que** lesdites données comprennent des instances de classes, chaque classe comportant au moins une instance, lesdits noeuds échangeant des données par l'intermédiaire d'un espace de données partagé qui comprend au moins un agent pour gérer l'échange de données entre les noeuds, ledit moyen pour distribuer des données sur le système incluant :
- un moyen pour publier la classe des données, ledit moyen étant hébergé par un noeud produisant les données, qui écrit ultérieurement des instances de ladite classe dans ledit espace de données partagé;
- un moyen pour souscrire à la classe des données, ledit moyen étant hébergé par au moins un noeud consommant les données, qui lit ultérieurement des instances de la classe à partir dudit espace de données partagé,
ledit agent étant configuré pour envoyer et recevoir des paquets qui contiennent des instances d'une classe qui sont écrits par un noeud de production et qui sont lus par un noeud de souscription,
le système étant en outre **caractérisé en ce que** les données sont convoyées depuis le noeud de production jusqu'aux noeuds de consommation en utilisantun canal de multidiffusion spécifique à la source "SSM", même dans le cas d'un seul noeud de consommation, de manière à limiter une distribution de données entre les noeuds, et **en ce qu'**une classe est associée de manière unique à une adresse de groupe et le noeud de production est associé de manière unique à l'adresse de source du canal "SSM".
